**Europäisches Patentamt**

**European Patent Office**

**Office européen des brevets**

(19)

(11) Veröffentlichungsnummer: **0 101 092**
**B1**

(12) **EUROPÄISCHE PATENTSCHRIFT**

(45) Veröffentlichungstag der Patentschrift:
**13.05.87**

(21) Anmeldenummer: **83108080.9**

(22) Anmeldetag: **16.08.83**

(51) Int. Cl.⁴: **H 01 H 1/58,** H 01 H 27/00,
G 06 F 3/06, G 06 F 1/00

(54) **Vorrichtung für elektrische Geräte zur äusseren Eingabe und/oder Anzeige von Informationen.**

(30) Priorität: **16.08.82 DE 3230412**

(43) Veröffentlichungstag der Anmeldung:
**22.02.84 Patentblatt 84/8**

(45) Bekanntmachung des Hinweises auf die Patenterteilung:
**13.05.87 Patentblatt 87/20**

(84) Benannte Vertragsstaaten:
**CH DE FR GB LI NL SE**

(56) Entgegenhaltungen:
**EP - A - 0 033 472
CH - A - 373 796
DE - A - 2 617 186
DE - A - 2 757 967
FR - A - 2 320 681
FR - A - 2 479 563
GB - A - 2 052 870
US - A - 4 210 382**

**IBM TECHNICAL DISCLOSURE BULLETIN, Band 23, Nr. 7A, Dezember 1980, Seite 2899, New York, US; P.J. CAPPILLINO: "Pluggable delay lines"**

(73) Patentinhaber: **Nixdorf Computer Aktiengesellschaft,
Fürstenallee 7, D-4790 Paderborn (DE)**

(72) Erfinder: **Knoop, Franz-Josef, Sonnenhang 7,
D-4793 Büren-Steinhausen (DE)**

(74) Vertreter: **Patentanwälte Schaumburg & Thoenes,
Mauerkircherstrasse 31 Postfach 86 07 48,
D-8000 München 80 (DE)**

ACTORUM AG

## Beschreibung

Die Erfindung bezieht sich auf eine Vorrichtung nach dem Oberbegriff des Anspruchs 1.

Eine derartige Vorrichtung wird auch als Codierschalter bezeichnet und ist in ähnlicher Form als Produkt der Firma Honeywell unter der Bezeichnung Micro Switch AML 21N/21P bekannt. Bei ihr ist in einem Sockel eine Anzahl von Kontaktpaaren angeordnet, die sich jeweils parallel zur Achse des Sockels erstrecken. Mittels einer an dem Sockel in einer einzigen möglichen Befestigungsstellung befestigten Haube, die in ihrem Inneren mechanisch kodierte Keile aufweist, wird eine bestimmte Kombination von Kontaktpaaren betätigt. Durch Auswechseln der Haube gegen eine mit anders kodierten Keilen versehene Haube kann die so eingestellte Nummer oder Adresse verändert werden. Diese bekannte Schalteranordnung hat jedoch infolge der axialen Ausrichtung der Kontaktpaare eine grosse Bauhöhe. Auch ist die Anzahl der Kontaktpaare gering. Weiter werden zwar bei dem erläuterten Verwendungszweck die Kontaktpaare nur relativ selten betätigt, jedoch muss trotzdem mit deren Funktionsausfall gerechnet werden. In diesem Fall ist dann ein Ausbau des gesamten Sockels erforderlich, dessen rückwärtige Anschlüsse gegebenenfalls mit einer Schaltungsplatine verlötet sind, wodurch sich ein grosser Reparaturaufwand ergibt. Die Schalteranordnung kann im übrigen zwar mit einer Anzeigelampe versehen werden, jedoch ist sie zur Abgabe von mehrere Bits umfassenden Informationen nicht geeignet und kann hierfür auch nicht umgerüstet werden.

Eine Vorrichtung eingangs genannter Art ist aus der FR-A 2 479 563 bekannt. Sie hat zwar eine relativ geringe Bauhöhe, ermöglicht aber nicht das Einsetzen von Anzeigemitteln und Schaltmitteln zur Informationseingabe und/oder Informationsausgabe.

Der Erfindung liegt die Aufgabe zugrunde, eine Vorrichtung der eingangs genannten Art zu schaffen, die eine geringe Bauhöhe aufweist, je nach Bedarf sowohl Anzeigemittel wie auch Schaltmittel zur Informations-Eingabe und/oder -Ausgabe aufweisen kann und bei der diese Anzeigemittel bzw. Schaltmittel leicht austauschbar sind. Diese Aufgabe wird gemäss der Erfindung bei einer Vorrichtung der eingangs genannten Art durch die im Kennzeichenteil des Anspruchs 1 angegebenen Merkmale gelöst. Vorteilhafte Weiterbildungen sind Gegenstand der Unteransprüche.

Bei einer Vorrichtung nach der Erfindung kann die Haube gleichfalls in nur einer einzigen möglichen Befestigungsstellung gegenüber dem Sockel befestigt werden. Dies bedeutet, dass eine gegenüber dieser Befestigungsstellung verdrehte Befestigungsstellung nicht möglich ist. Dadurch können die in einer vorgegebenen Verteilung vorgesehenen Betätigungsnocken beim Aufsetzen der Haube auf den Sockel nur in ihrer vorgegebenen Verteilung auf die Wippschalter einwirken. Infolge der geringen Schaltwege handelsüblicher steckbarer Wippschalter können die Betätigungsnocken aber sehr kurz sein, wodurch sich eine geringe Bauhöhe der Gesamtvorrichtung verwirklichen lässt. Die kurzen Betätigungsnocken stören auch nicht eventuell vorgesehene Anzeigemittel. Unter Ausnutzung des Steckhülsenprinzips ergibt sich die Möglichkeit des besonders leichten Austauschens von Wippschaltern und/oder Anzeigemitteln ohne Demontage der gesamten Vorrichtung.

Die Erfindung wird im folgenden an Hand der Zeichnungen näher erläutert, in denen Ausführungsbeispiele dargestellt sind.

Es zeigt:

Fig. 1 in Explosionsdarstellung eine Vorrichtung zur Informationseingabe in Gestalt einer Schalteranordnung;

Fig. 2 in perspektivischer teilweiser Darstellung eine Vorrichtung zur Informationseingabe und -anzeige, bei der auf mehreren Sockeln sowohl Schalterbausteine als auch Anzeigeelemente vorgesehen sind;

Fig. 3 eine Längsschnitt durch eine erste mögliche Ausführungsform eines Sockels zur Verwendung bei der Vorrichtung nach Figur 1 oder 2 und

Fig. 4 eine zweite mögliche Ausführungsform eines solchen Sockels.

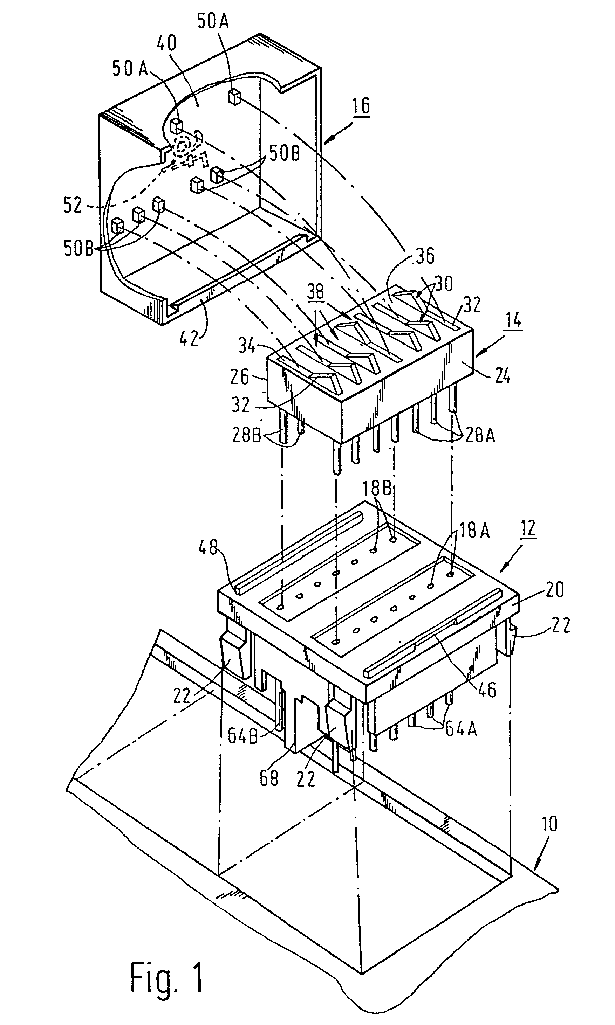

Die in Fig. 1 dargestellte Schalteranordnung dient zur Einstellung der der sedezimalen Nummer 7.6 entsprechenden 7-stelligen Binärzahl als Adresse eines Datenverarbeitungs-Peripheriegerätes. Die Schalteranordnung umfasst einen an einer Öffnung eines nicht dargestellten Gehäuses angeordneten Rahmen 10, einen in dem Rahmen 10 befestigten Sockel 12, einen am Sockel 12 eingesteckt gehaltenen Schalterbaustein 14 und eine am Sockel 12 lösbar befestigte, den Schalterbaustein 14 überdeckende Haube 16.

Der aus einem isolierenden Kunststoff bestehende Sockel 12 ist bezüglich einer in Fig. 1 von vorne unten links nach hinten oben rechts verlaufend zu denkenden Längsmittelebene im wesentlichen symmetrisch ausgebildet. Er weist zwei bezüglich dieser Längsmittelebene symmetrisch angeordnete parallele Reihen von jeweils 7 Steckhülsen 18A, 18B auf, die in jeder Reihe untereinander gleiche Abstände haben. Die sich parallel zur in Fig. 1 lotrechten Achse des Sockels 12 erstreckenden Steckhülsen 18A, 18B liegen mit ihren Aufnahmeöffnungen auf der Oberseite des Sockels 12 frei. Die Steckhülsen 18A, 18B haben einen kreisförmigen Innenquerschnitt. Insgesamt entspricht die Anordnung der Steckhülsen 18A, 18B der Anordnung der Kontaktstifte bei handelsüblichen Dual-in-line-Schaltungsbausteinen, so dass der Sockel ausser zu der noch zu beschreibenden Unterbringung von Schalterbausteinen und Anzeigemitteln auch zur Unterbringung von in dieser Bauart ausgeführten integrierten Schaltungen geeignet ist. Dies macht es möglich, durch Einbau unterschiedlich programmierter integrierter Schaltungen gewünschtenfalls den Programmablauf oder andere Funktionen eines elektrischen Gerätes von aussen her zu steuern.

Im eingebauten Zustand ragt der Sockel 12 über den Rahmen 10 um die Höhe eines umlaufenden Randes 20 hervor, mit dem er auf der Vorderseite des Rahmens 10 aufliegt, während auf gegenüberliegenden Seiten des Sockels 12 jeweils zwei federnd angeformte Rastnasen 22 den Rahmen 10 durchgreifen und dessen Rand hintergreifen.

Der Schalterbaustein 14 ist quaderförmig. Seine grösste Länge ist etwas geringer als die Seitenlänge des Sockels 12. An seiner Rückseite weist der Schalterbaustein 14 entlang zweier gegenüberliegender Längsseiten 24, 26 zwei parallele Reihen von jeweils 7 Kontaktstiften 28A, 28B auf. Deren Anordnung entspricht derjenigen der Steckhülsen 18A, 18B, so dass im montierten Zustand der Schalterbaustein 14 mit den Kontaktstiften 28A, 28B durch Reibung in den Steckhülsen 18A, 18B gehalten ist. Weiter enthält der Schalterbaustein 14 sieben nicht dargestellte Kontaktpaare, die in ihm jeweils an zwei an den Längsseiten 24, 26 einander gegenüberliegenden Kontaktstiften 28A, 28B angeschlossen sind und sich zwischen diesen erstrecken. An der Vorderseite des Schalterbausteines 14 liegen 7 Schaltwippen 30 frei, die jeweils in der Ebene eines Paares von einander gegenüberliegenden Kontaktstiften 28A, 28B liegen und die um eine zu den Längsseiten 24, 26 parallele Längsachse jeweils zwischen zwei möglichen Schaltstellungen beweglich sind. Ihre oben liegenden Betätigungsflächen 32, 34 schliessen einen stumpfen Winkel miteinander ein, der annähernd der Differenz zwischen 180° und demjenigen Schwenkwinkel gleicht, um den die Schaltwippen 30 beweglich sind. Hierdurch liegt bei einer der möglichen Schaltstellungen, wie beispielsweise bei der in Fig. 1 am weitesten rechts liegenden Schaltwippe, die Betätigungsfläche 32 fluchtend mit der Oberseite 36 des Körpers des Schalterbausteines 14, während bei der anderen möglichen Schaltstellung, wie beispielsweise bei der in Fig. 1 am weitesten links liegenden Schaltwippe 30 ersichtlich, die andere Betätigungsfläche 34 mit der Oberseite 36 fluchtet. Mit der nicht fluchtenden Betätigungsfläche 34 bzw. 32 ragt die Schaltwippe 30 aus der Oberseite 36 heraus. Jede Schaltwippe 30 ist einem der erwähnten Kontaktpaare zugeordnet und bildet zusammen mit diesem einen Wippschalter 38.

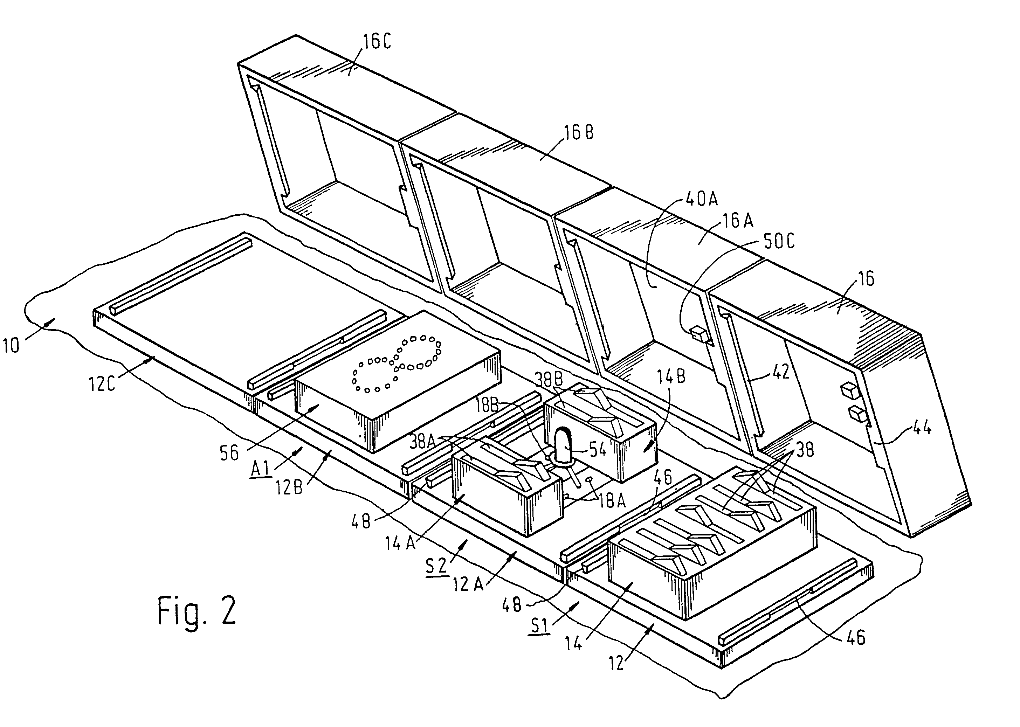

Die Haube 16 hat die Gestalt eines unten offenen, im Querschnitt quadratischen Kastens; ihre Aussenquerschnittsabmessungen gleichen dem Querschnitt des Sockels 12 im Bereich von dessen Rand 20. Die Haube 16 ist von ausserhalb des Gerätes frei zugänglich und ragt mit zumindest einem Teil ihrer Höhe aus dem nicht dargestellten Gehäuse des Gerätes hervor, um erforderlichenfalls ergriffen und abgenommen werden zu können. Zur Erzielung einer geringen Bauhöhe der Schalteranordnung ist die Höhe der Haube 16 nicht wesentlich grösser als die Höhe des Schalterbausteines 14 und damit mehrfach geringer als die Seitenlänge des Sockels 12. Die Stirnwand 40 der Haube 16 ist mit einem lesbaren Symbol – beim Ausführungsbeispiel mit der Sedezimalzahl 7.6 – versehen, das die Kombination der gewünschten Schaltstellungen der Wippschalter 38 und damit die mittels der Haube 16 einzustellende Adresse bezeichnet. An zwei gegenüberliegenden, dem Sockel 12 benachbarten Rändern weist die Haube 16 einwärts ragende Rastnasen 42, 44 (vergleiche auch Fig. 2) auf, mit denen sie am Sockel 12 gebildete Rastflächen 46, 48 elastisch nachgiebig hintergreift. Aufgrund dieser Befestigung kann die Haube 16 nur in einer einzigen möglichen Befestigungsstellung gegenüber dem Sockel 12 an diesem gehalten werden. Auf der Innenseite der Stirnwand 40 der Haube 16 sind Betätigungsnocken 50A, 50B angeformt, wobei jedem Wippschalter 38 entweder eine Betätigungsnocke 50A oder eine Betätigungsnocke 50B zugeordnet ist. Die Betätigungsnocken 50A haben eine derartige Stellung, dass sie die entsprechenden Schaltwippen 30 auf deren Betätigungsflächen 32 beaufschlagen und niederdrücken, so dass die entsprechenden Wippschalter 38 die beispielsweise in Fig. 1 bei dem am weitesten rechts liegenden Wippschalter 38 liegende Schaltstellung einnehmen. Die Betätigungsnocken 50B beaufschlagen in entsprechender Weise die Betätigungsflächen 34, so dass die andere mögliche Schaltstellung eingenommen wird. Hierdurch wird von der Haube 16 eine einem vorgegebenen Bit-Muster oder einer vorgegebenen Binärzahl entsprechende Kombination von Schaltstellungen der Wippschalter 38 erzwungen, wobei die genannte Binärzahl dem auf der Stirnwand 40 dargestellten Symbol 52, nämlich der Sedezimalzahl 7.6, entspricht.

Die in Fig. 2 gezeigte Schalter- und Anzeigeanordnung umfasst ausser der bereits anhand von Fig. 1 beschriebenen Schalteranordnung S1 eine weitere Schalteranordnung S2, eine Anzeigeanordnung A1 und einen als Platzhalter für nicht benötigte Plätze im Rahmen 10 ausgebildeten Sockel 12C, die in einer Reihe unmittelbar aneinander anschliessend in dem Rahmen 10 angeordnet sind. Dabei sind der Sockel 12A der Schalteranordnung S2, der Sockel 12B der Anzeigeanordnung A1 und der weitere Sockel 12C von genau gleicher Ausführung wie der Sockel 12 der Schalteranordnung S1, und die jeweils zugeordneten Hauben 16, 16A, 16B, 16C sind von untereinander gleichen Aussenabmessungen und bestehen aus demselben Material, nämlich einem lichtdurchlässigen Kunststoff.

Das Kunststoffmaterial der Hauben 16, 16A, 16B, 16C ist dunkel eingefärbt. Als am zweckmässigsten hat sich eine beim Ausführungsbeispiel verwendete rauchschwarze Einfärbung erwiesen. Weiter ist die Aussenseite der äusseren Stirnwand jeder Haube 16, 16A, 16B, beispielsweise der Stirnwände 40, 40A, in nicht näher dargestellter Weise gerauht ausgebildet. Die Rauhung kann unmittelbar bei der Herstellung in einer Spritzgussform erzielt werden. Durch die dunkle Einfärbung und die Rauhung sind unter der Haube vorgesehene, nicht leuchtende Bauelemente nicht sichtbar, während leuchtende Anzeigeelemente, also die leuchtende Leuchtdiode 54 oder der ein Zeichen darstellende Anzeigebaustein 56, durch die Haube 16A bzw. 16B hindurch gut sichtbar sind. Dabei wird der schädliche Einfluss von Fremdlicht ausgeschaltet, der bei sonstigen Anzeigevorrichtungen dazu führen kann, dass ein unter einer Haube leuchtendes Anzeigeelement nicht oder nicht genügend klar erkannt werden kann.

Bei der Schalteranordnung S2 sind zwei Schalterbausteine 14A, 14B vorgesehen, die jeweils nur zwei Wippschalter 38A, 38B aufweisen, so dass sie zusammen nicht alle Steckhülsen 18A, 18B belegen. Jedem Wippschalter ist eine in der Haube 16A vorgesehene Betätigungsnocke zugeordnet, in der Darstellung ist nur eine solche Nocke 50C sichtbar. Zwischen den Schalterbausteinen 14A, 14B ist als Anzeigemittel eine Leuchtdiode 54 angeordnet, deren Anschlussdrähte in Steckhülsen 18A bzw. 18B eingesteckt sind. Die Leuchtdiode 54 kann dazu dienen, das nicht sichtbare, auf der Stirnwand 40A der Haube 16A vorgesehene, dem Symbol 52 (Fig. 1) entsprechende Symbol von innen zu beleuchten und sichtbar zu machen, während sie darüber hinaus auch als Betriebsanzeige dienen kann, indem sie lediglich bei in Betrieb befindlichem Gerät eingeschaltet wird.

Bei der Anzeigevorrichtung A1 ist im Sockel 12B ein als Segment-Anzeigeelement ausgebildeter Anzeigebaustein 56 eingesteckt gehalten, dessen Abmessungen annähernd mit denjenigen des Schalterbausteines 14 übereinstimmen und der in entsprechender Weise mit nicht dargestellten, in die Steckhülsen des Sockels 12B eingesteckten Kontaktstiften versehen ist. Ein von dem Anzeigebaustein 56 bei dessen Betrieb dargestelltes alphanumerisches Zeichen kann beispielsweise dazu dienen, dem Benutzer des Gerätes einen bestimten Betriebszustand des Gerätes anzuzeigen. Auch können derartige Anzeigevorrichtungen dazu dienen, die mittels Schalteranordnungen nach Art der Schalteranordnung S1 eingestellte Adresse anzuzeigen, wobei dann die anhand der Schalteranordnung S2 erläuterte Innenbeleuchtung von Symbolen nach Art des Symbols 52 in Fig. 1 entfallen kann. Das dargestellte Zeichen ist von aussen durch die lichtdurchlässige Haube 16B hindurch sichtbar.

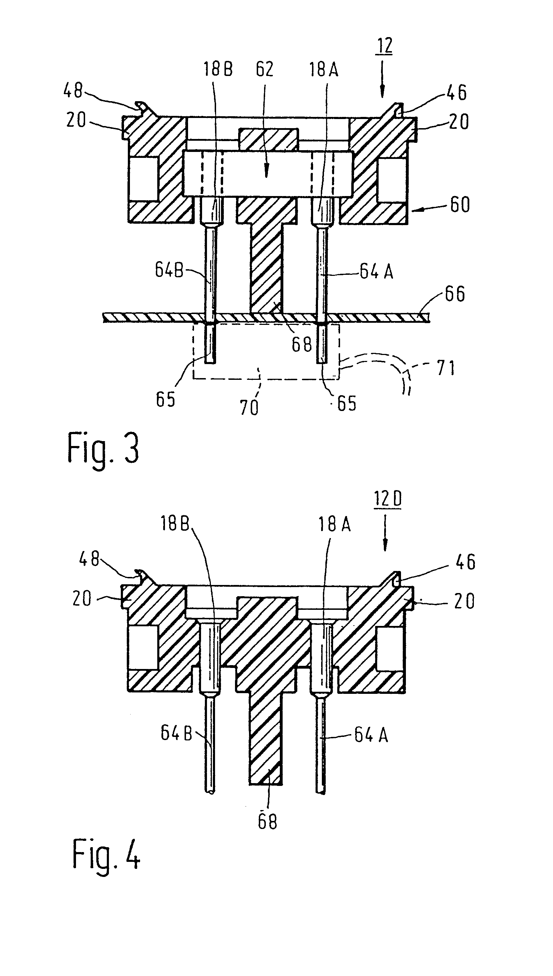

Wie Fig. 3 zeigt, kann der Sockel 12 (ebenso wie die Sockel 12A bis 12C in Fig. 2) aus einem Rahmen 60 und einer darin gehaltenen Platte 62 bestehen, die von den Steckhülsen 18A, 18B durchsetzt ist. Hierdurch wird die Herstellung insofern erleichtert, als die Steckhülsen 18A, 18B in besonders einfacher Weise in der Platte 62 befestigt werden können. Die Platte 62 kann ein handelsüblicher Stecksockel für integrierte Schaltungen sein und kann mit dem Rahmen 60 umgossen sein.

Eine andere Herstellungsmöglichkeit ist in Fig. 4 gezeigt. Hierbei ist ein Sockel 12D einstükkig aus Kunststoff gebildet, und die Steckhülsen 18A, 18B sind nachträglich in diesem befestigt oder werden vor dem Spritzen des Kunststoffteils in die Spritzform eingebracht, wo sie in einem Arbeitsgang mit umspritzt werden. Im übrigen ist der Sockel 12D von gleicher Ausführung wie der Sockel 12. Der Platzhalter-Sockel 12C (Fig. 2) wird in gleicher Weise hergestellt, jedoch unter Fortfall der Platte 62 in Fig. 3 bzw. der Steckhülsen 18A, 18B in Fig. 4. Der von diesen Elementen in der Spritzform nicht ausgefüllte Platz wird dann von der Spritzmasse eingenommen, so dass sich eine geschlossene Fläche ergibt.

Wie weiter aus Fig. 3 hervorgeht, setzen sich die Steckhülsen 18A, 18B an ihren hinteren Enden jeweils in einem als Stift 64A, 64B ausgebildeten elektrischen Anschluss des Sockels 12 fort. Diese Stifte 64A, 64B können wie beim Ausführungsbeispiel in eine Schaltungsplatine 66 eingelötet sein, wo sie mit jeweils einer nicht dargestellten elektrischen Leiterbahn verbunden sind. Sofern wie beim Ausführungsbeispiel nach Fig. 2 mehrere Schalteranordnungen S1, S2 und/oder Anzeigevorrichtungen A1 nebeneinander angeordnet sind, kann die Schaltungsplatine 66 diesen gemeinsam sein, wobei es dann weiter vorteilhaft ist, dass diese ausschliesslich an den Stiften 64A, 64B aller Sockel 12, 12A, 12B (Fig. 2) getragen sein kann, ohne dass sonstige Befestigungsmittel erforderlich sind. Um die Schaltungsplatine 66 beim Verlöten mit den Stiften 64A, 64B in einem vorgegebenen Abstand von den Sockeln zu halten und nach dem Verlöten die mechanische Stabilität zu erhöhen, können die Sockel, wie im Beispiel des Sockels 12 dargestellt, jeweils einen sich nach hinten bis zu der Oberseite der Schaltungsplatine 66 erstreckenden Fortsatz 68 aufweisen.

Eine weitere mögliche, in Fig. 3 dargestellte Ausgestaltung kann darin bestehen, dass die als Stifte ausgebildeten Anschlüsse 64A, 64B die Schaltungsplatine 66 durchsetzen, so dass ihre Enden 65 aus der Rückseite der Schaltungsplatine 66 um eine vorgegebene Länge hervorstehen. Entsprechend der Anordnung der Steckhülsen 18A, 18B haben dann auch diese Enden 65 eine den Kontakstiften üblicher Dual-in-line-Schaltungselemente entsprechende Anordnung, so dass auf sie eine zum Anschluss solcher Schaltungselemente übliche, in Fig. 3 nur gestrichelt angedeutete Steckbuchsenleiste 70 aufgesteckt werden kann. Hiermit ist eine leichte Beschaltung beispielsweise der gesamten in Fig. 2 dargestellten Vorrichtung möglich. Die Steckbuchsenleiste 70 kann beispielsweise über ein ebenfalls nur gestrichelt angedeutetes Flachbandkabel 71 mit weiteren Geräteteilen und einer Stromversorgung verbunden werden. Die beschriebene Steckverbindung macht es auch möglich, gemäss der Erfindung ausgebildete Vorrichtungen mit bekannten Schalter- und Anzeigeanordnungen der eingangs genannten Art zu kombinieren, die eine sehr viel grössere Einbautiefe haben. Es könnte dann beispielsweise für letztere eine gesonderte Schaltungsplatine vorgesehen werden, und das Flachbandkabel 71 kann zu dieser zusätzlichen Schaltungsplatine geführt werden.

Die beschriebene Schalteranordnung ist überall dort mit Vorteil verwendbar, wo eine bestimmte Kombination von Stellungen mehrerer Schalter über eine längere Zeit beibehalten, jedoch erforderlichenfalls leicht jederzeit abgeändert werden soll.

**Patentansprüche**

1. Vorrichtung für elektrische Geräte zur äusseren Eingabe von Informationen, mit mindestens einem rückseitig mit elektrischen Anschlüssen versehenen flachen Sockel (12, 12A, 12B) mit rechteckigem Querschnitt, einer am Sockel (12, 12A, 12B) lösbar befestigten flachen Haube (16, 16A, 16B) und zwei im Sockel (12, 12A, 12B) vorgesehenen parallelen Reihen von mit gleichem Abstand nebeneinander liegenden Steckhülsen (18A, 18B), die jeweils mit einem Anschluss (64A, 64B) verbunden und in die Schaltmittel (14, 14A, 14B) einsteckbar sind, die von der Haube (16, 16A, 16B) überdeckt werden, dadurch gekennzeichnet, dass die Haube (16, 16A, 16B) und der Sockel (12, 12A, 12B) zur Befestigung der Haube (16, 16A, 16B) in nur einer möglichen Orientierung ausgebildet sind, dass die Haube (16, 16A, 16B) auf der Innenseite ihrer Stirnwand Betätigungsnocken (50A, 50B, 50C) in vorgegebener Verteilung trägt, die im Aufsetzen der Haube (16, 16A, 16B) auf den Sockel (12, 12A, 12B) auf in die Steckhülsen (18A, 18B) eingesteckte Wippschalter (14, 14A, 14B) einwirken, und dass in die Steckhülsen (18A, 18B) neben oder statt der Anschlusselemente der Wippschalter (14, 14A, 14B) auch die Anschlusselemente von auf der Vorderseite des Sockels (12A) und unter der Haube (16A) als Anzeigemittel angeordneten elektrischen Lichtquellen (54, 56) eingeführt werden können.

2. Vorrichtung nach Anspruch 1, dadurch gekennzeichnet, dass bei Anordnung einer Lichtquelle (54) neben den Wippschaltern (38A, 38B) die Anzahl der Wippschalter (38A, 38B) geringer ist als die halbe Anzahl der Steckhülsen (18A, 18B).

3. Vorrichtung nach Anspruch 2, dadurch gekennzeichnet, dass als Anzeigemittel eine Leuchtdiode (54) vorgesehen ist.

4. Vorrichtung nach Anspruch 2 oder 3, dadurch gekennzeichnet, dass an dem Sockel (12A) zwei Schalterbausteine (14A, 14B) in gegenseitigem Abstand gehalten sind, die jeweils eine Anzahl von Wippschaltern (38A, 38B) aufweisen, die geringer als ein Viertel der Anzahl der Steckhülsen (18A, 18B) ist, und dass die Lichtquelle (54) auf der Mitte des Sockels (12A) zwischen den Schalterbausteinen (14A, 14B) angeordnet ist.

5. Vorrichtung nach einem der Ansprüche 1 bis 4, dadurch gekennzeichnet, dass ein weiterer Sockel (12B) vorgesehen ist, auf dessen Vorderseite als Anzeigemittel ein parallel zur Vorderseite des Sockels (12B) liegendes, quaderförmiges Anzeigeelement (56) vorgesehen ist, das in die Steckhülsen (18A, 18B) eingesteckt ist und zur Anzeige mindestens eines Zeichens vorzugsweise als Segment-Anzeigeelement ausgebildet ist.

6. Vorrichtung nach einem der vorangehenden Ansprüche, dadurch gekennzeichnet, dass die Haube (16, 16A, 16B) an zwei gegenüberliegenden, dem Sockel (12, 12A, 12B, 12D) benachbarten Rändern einwärtsragende Rastnocken (42, 44) unterschiedlicher Länge aufweist, mit denen sie am Sockel (12, 12A, 12B, 12D) gebildete Rastflächen (46, 48) jeweils gleicher Länge hintergreift.

7. Vorrichtung nach einem der vorangehenden Ansprüche, dadurch gekennzeichnet, dass der Sockel (12, 12A, 12B, 12D) in einem Montagerahmen (10) angeordnet ist, auf dessen Vorderseite er mit vorspringenden Rändern (20) aufsitzt und den er mit Rastfortsätzen (22) hintergreift.

8. Vorrichtung nach einem der vorangehenden Ansprüche, dadurch gekennzeichnet, dass der Sockel (12, 12A, 12B) aus einem Rahmen (60) und einer darin gehaltenen Platte (62) besteht, die von den Steckhülsen (18A, 18B) durchsetzt ist.

9. Vorrichtung nach einem der vorangehenden Ansprüche, dadurch gekennzeichnet, dass sich die Steckhülsen (18A, 18B) in jeweils einem als Stift ausgebildeten Anschluss (64A, 64B) des Sockels (12, 12A, 12B, 12D) forsetzen.

10. Vorrichtung nach Anspruch 9, dadurch gekennzeichnet, dass die Anschlüsse (64A, 64B) des Sockels (12, 12A, 12B, 12D) mit den Leiterbahnen einer hinter dem Sockel (12, 12A, 12B, 12D) liegenden sich senkrecht zu dessen Achse erstreckenden Schaltungsplatine (66) verlötet sind.

11. Vorrichtung nach Anspruch 10, dadurch gekennzeichnet, dass die Anschlüsse (64A, 64B) des Sockels (12, 12A, 12B, 12D) die Schaltungsplatine (66) durchsetzen und aus deren Rückseite zur Bildung einer Steckverbindung (65, 70) um eine vorgegebene Länge hervorstehen.

12. Vorrichtung nach Anspruch 11, dadurch gekennzeichnet, dass der Sockel (12, 12A, 12B, 12D) einen sich nach hinten bis zur Schaltungsplatine (66) erstreckenden Fortsatz (68) aufweist.

13. Vorrichtung nach einem der Ansprüche 10 bis 12, dadurch gekennzeichnet, dass eine mehreren Sockeln (12, 12A, 12B) gemeinsame Schaltungsplatine (66) vorgesehen ist.

14. Vorrichtung nach Anspruch 13, dadurch gekennzeichnet, dass die Schaltungsplatine (66) ausschliesslich an den Anschlüssen (64A, 64B) der Sockel (12, 12A, 12B) getragen ist.

15. Vorrichtung nach einem der vorhergehenden Ansprüche, dadurch gekennzeichnet, dass die Stirnwand (40, 40A) der Haube (16, 16A) mit einem lesbaren Symbol (52) versehen ist, das die Kombination der vorgegebenen Schaltstellungen der Wippschalter (38, 38A, 38B) bezeichnet.

16. Vorrichtung nach einem der Ansprüche 2 bis 15, dadurch gekennzeichnet, dass die Haube (16, 16A, 16B) lichtdurchlässig ausgebildet ist.

17. Vorrichtung nach Anspruch 16, dadurch gekennzeichnet, dass die Haube (16, 16A, 16B) zumindest im Bereich ihrer äusseren Stirnwand (40, 40A) aus einem dunkel eingefärbten Material besteht.

18. Vorrichtung nach Anspruch 17, dadurch gekennzeichnet, dass die Haube (16, 16A, 16B) rauchschwarz eingefärbt ist.

19. Vorrichtung nach einem der Ansprüche 16 bis 18, dadurch gekennzeichnet, dass die Aussenseite der äusseren Stirnwand (40, 40A) der Haube (16, 16A, 16B) gerauht ausgebildet ist.

## Claims

1. A device for electrical equipment for the external inputting of information, comprising at least one flat base (12, 12A, 12B) of rectangular cross-section, said base being provided with electrical connections at the back, a flat cap (16, 16A, 16B) detachably secured to the base (12, 12A, 12B), and two parallel rows of equidistant sockets (18A, 18B) which are provided in the base (12, 12A, 12B) and which are each connected to a connection (64A, 64B) and are adapted to receive switching means (14, 14A, 14B) covered by the cap (16, 16A, 16B), characterised in that the cap (16, 16A, 16B) and the base (12, 12A, 12B) are constructed in only one possible orientation for securing the cap (16, 16A, 16B); the cap has actuating cams (50A, 50B, 50C) in a predetermined distribution on the inside of its end wall and when the cap (16, 16A, 16B) is fitted on the base (12, 12A, 12B) said cams act on rocker switches (14, 14A, 14B) fitted in the sockets (18A, 18B); and in addition to or instead of the connecting elements of the rocker switches (14, 14A, 14B) it is also possible to introduce into the sockets (18A, 18B) the connecting elements of electric light sources (54, 56) provided as display means on the front of the base (12A) and beneath the cap (16A).

2. A device according to claim 1, characterised in that when a light source (54) is provided in addition to the rocker switches (38A, 38B) the number of rocker switches (38A, 38B) is less than half the number of sockets (18A, 18B).

3. A device according to claim 2, characterised in that a light emitting diode (54) is provided as display means.

4. A device according to claim 2 or 3, characterised in that two switch modules (14A, 14B) are held in mutually spaced relationship on the base (12A) and each contains a number of rocker switches (38A, 38B) less than one-quarter of the number of sockets (18A, 18B); and the light source (54) is disposed on the middle of the socket (12A) between the switch modules (14A, 14B).

5. A device according to any one of claims 1 to 4, characterised in that another base (12B) is provided, on the front of which a parallelepipedal display element (56) disposed parallel to the front of the base (12B) is provided as display means and is inserted into the sockets (18A, 18B) and is preferably constructed as a segment display means in order to display at least one character.

6. A device according to any one of the preceding claims, characterised in that the cap (16, 16A, 16B) has inwardly projecting detent means (42, 44) of different lengths at two opposite edges adjacent the base (12, 12A, 12B, 12D), by means of which it engages behind detent surfaces (46, 48) each of the same length provided on the base (12, 12A, 12B, 12D).

7. A device according to any one of the preceding claims, characterised in that the base (12, 12A, 12B, 12D) is disposed in a mounting rack (10), on the front of which it fits by projecting edges (20) and behind which it engages by detent projections (22).

8. A device according to any one of the preceding claims, characterised in that the base (12, 12A,12B) consists of a frame (60) and plate (62) which is held therein and through which the sockets (18A, 18B) extend.

9. A device according to any one of the preceding claims, characterised in that the sockets (18A, 18B) each continue in the form of a connection (64A, 64B) of the base (12, 12A, 12B, 12D), such connections being formed as pins.

10. A device according to claim 9, characterised in that the connections (64A, 64B) of the base (12, 12A, 12B, 12D) are soldered to the printed conductors of a printed circuit board (66) situated behind the base (12, 12A, 12B, 12D) and extending perpendicularly to the axis thereof.

11. A device according to claim 10, characterised in that the connections (64A, 64B) of the base (12, 12A, 12B, 12D) extend through the circuit board (66) and project from the back thereof by a predetermined length in order to form a plug connection (65, 70).

12. A device according to claim 11, characterised in that the base (12, 12A, 12B, 12D) has a continuation (68) extending rearwardly as far as the circuit board (66).

13. A device according to any one of claims 10 to 12, characterised in that one circuit board (66) common to a plurality of bases (12, 12A, 12B) is provided.

14. A device according to claim 13, characterised in that the circuit board (66) is carried solely at the connections (64A, 64B) of the base (12, 12A, 12B).

15. A device according to any one of the preceding claims, characterised in that the end wall (40, 40A) of the cap (16, 16A) is provided with a readable symbol (52) which indicates the combination of the predetermined switching positions of the rocker switches (38, 38A, 38B).

16. A device according to any one of claims 2 to 15, characterised in that the cap (16, 16A, 16B) is translucent.

17. A device according to claim 16, characterised in that the cap (16, 16A, 16B) consists of a darkcoloured material, at least in the region of its outer end wall (40, 40A).

18. A device according to claim 17, characterised in that the cap (16, 16A, 16B) is coloured smoky black.

19. A device according to any one of claims 16 to 18, characterised in that the outside of the outer end wall (40, 40A) of the cap (16, 16A, 16B) is roughened.

**Revendications**

1. Dispositif pour appareils électriques destiné à l'introduction externe d'informations, avec au moins un socle plat (12, 12A, 12B) à section droite rectangulaire, prévu avec des connecteurs électriques sur le côté arrière, un couvercle plat (16, 16A, 16B) se fixant au socle (12, 12A, 12B) de façon amovible et deux rangées parallèles, prévues dans le socle (12, 12A, 12B), des douilles de connexion (18A, 18B) situées à côté les unes des autres à des intervalles égaux, qui sont reliées chacune à une broche de connexion (64A, 64B) et peuvent être enfichées avec les moyens de commutation (14, 14A, 14B) qui sont couverts par le couvercle (16, 16A, 16B), caractérisé en ce que le couvercle (16, 16A, 16B) et le socle (12, 12A, 12B) sont conformés pour permettre la fixation du couvercle (16, 16A, 16B) à une seule orientation possible, en ce que le couvercle (16, 16A, 16B) porte sur la face intérieure de sa paroi frontale des cames d'actionement (50A, 50B, 50C) selon une répartition prédéterminée, qui agissent, lorsqu'on pose le couvercle (16, 16A, 16B) sur le socle (12, 12A, 12B), sur des interrupteurs basculants (14, 14A, 14B) introduits dans les douilles de connexion (18A, 18B), et en ce que l'on peut introduire dans ces douilles de connexion (18A,18B) à côté de ou à la place des éléments de connexion des interrupteurs basculants (14, 14A, 14B), également les éléments de connexion de sources lumineuses électriques (54, 56) disposées en tant que moyens de signalisation sur la face avant du socle (12A) et en-dessous du couvercle (16A).

2. Dispositif selon la revendication 1, caractérisé en ce que, par suite du montage d'une source lumineuse (54) à côté des interrupteurs basculants (38A, 38B), le nombre de ces derniers est inférieur à la moitié du nombre des douilles de connexion (18A, 18B).

3. Dispositif selon la revendication 2, caractérisé en ce qu'il est prévu, comme moyen de signalisation, une diode électro-lumineuse (54).

4. Dispositif selon la revendication 2 ou 3, caractérisé en ce que deux modules de commutation (14A, 14B) sont tenus sur le socle (12A) à distance mutuelle et ils présentent chacun un nombre d'interrupteurs basculants (38A, 38B) qui est inférieur au quart du nombre des douilles de connexion (18A, 18B), et la source lumineuse (54) est située au milieu du socle (12A) entre les modules de commutation (14A, 14B).

5. Dispositif selon l'une quelconque des revendications 1 à 4, caractérisé en ce qu'il est prévu un socle supplémentaire (12B) sur la face avant duquel est prévu, comme moyen de signalisation un élément de signalisation (56) parallélépipédique, disposé parallèlement à la face avant du socle (12B), qui est introduit dans les douilles de connexion (18A, 18B) et qui, pour faire apparaître au moins un signe, est constitué de préférence avantageusement par un élément de signalisation à segments.

6. Dispositif selon l'une quelconque des revendications précédentes, caractérisé en ce que le couvercle (16, 16A, 16B) présente, sur deux bord opposés voisins du socle (12, 12A, 12B, 12D), des barrettes d'accrochage (42, 44) de longueurs différentes, en saillie vers l'intérieur, par lesquelles il s'accroche à des faces d'accrochage (46, 48) de même longueur respectivement prévues sur le socle (12, 12A, 12B, 12D).

7. Dispositif selon l'une quelconque des revendications précédentes, caractérisé en ce que le socle (12, 12A, 12B 12D) est placé dans un châssis de montage (10) sur la face antérieure duquel il repose par des bords (20) en saillie et auquel il s'accroche par des moyens d'accrochage (22).

8. Dispositif selon l'une quelconque des revendications précédentes, caractérisé en ce que le socle (12, 12A, 12B) consiste en un châssis (60) et une plaque (62) qui y est tenue et qui est traversée par les douilles de connexion (18A,18B).

9. Dispositif selon l'une quelconque des revendications précédentes, caractérisé en ce que les douilles de connexion (18A, 18B) sont chacune en un moyen de connexion (64A, 64B) du socle (12, 12A, 12B, 12D) en forme de fiche.

10. Dispositif selon la revendication 9, caractérisé en ce que les moyens de connexion (64A, 64B) du socle (12, 12A, 12B, 12D) sont soudées aux lignes conductrices d'un support de circuits (66) placé derrière le socle (12, 12A, 12B, 12D) s'étendant perpendiculairement à son axe.

11. Dispositif selon la revendication 10, caractérisé en ce que les moyens de connexion (64A, 64B) du socle (12, 12A, 12B, 12D) traversent le support de circuits (66) et dépassent de sa face arrière sur une longueur prédéterminée pour constituer un connecteur (65, 70).

12. Dispositif selon la revendication 11, caractérisé en ce que le socle (12, 12A, 12B, 12D) comprend un appendice (68) qui s'étend vers l'arrière jusqu'au support de circuits électriques (66).

13. Dispositif selon l'une quelconque des revendications 10 à 12, caractérisé en ce qu'il est prévu un support de circuits électriques (66) commun à plusieurs socles (12, 12A, 12B).

14. Dispositif selon la revendication 13, caractérisé en ce que le support de circuits (66) est porté exclusivement par les moyens de connexion (64A, 64B) des socles (12, 12A, 12B).

15. Dispositif selon l'une quelconque des revendications précédentes, caractérisé en ce que la paroi frontale (40, 40A) du couvercle (16, 16A) comporte un symbole lisible (52) qui indique la combinaison des positions de commutation prédéterminées des interrupteurs basculants (38, 38A, 38B).

16. Dispositif selon l'une quelconque des revendications 2 à 15, caractérisé en ce que le couvercle (16, 16A, 16B) est transparent.

17. Dispositif selon la revendication 16, caractérisé en ce que le couvercle (16, 16A, 16B) est constitué par une matière à coloration foncée au moins dans la zone de sa paroi frontale extérieure (40, 40A).

18. Dispositif selon la revendication 17, caractérisé en ce que le couvercle (16, 16A, 16B) a une coloration noir de fumée.

13       0 101 092       14

19. Dispositif selon l'une quelconque des revendications 16 à 18, caractérisé en ce que la face extérieure de la paroi frontale extérieure (40, 40A) du couvercle (16, 16A, 16B) est rugueuse.

Fig. 1

Fig. 2

0 101 092

Fig. 3

Fig. 4